# EUROPÄISCHE PATENTSCHRIFT

(11) **EP 0 796 906 B1**
(45) Veröffentlichungstag und Bekanntmachung des Hinweises auf die Patenterteilung: **05.11.2003**
(21) Anmeldenummer: 97104121.5
(22) Anmeldetag: 12.03.1997
(51) Int. Cl.: C09J 7/02, C09J 133/06

(54) **Verpackungs-Klebeband**
Packaging adhesive tape
Bande adhésive d'emballage

(30) Priorität: 23.03.1996 DE 19611501
(43) Veröffentlichungstag der Anmeldung: 24.09.1997
(73) Patentinhaber: Tesa AG, 20253 Hamburg (DE)
(72) Erfinder: Röber, Stefan, Dr., 22453 Hamburg (DE); Sinnen, Herbert, 25421 Pinneberg (DE); Biasoli, Ernesto, 21026 Gavirate (IT)

(56) Entgegenhaltungen:
- US-A- 4 280 942

## Beschreibung

Gegenstand der Erfindung sind lösemittelfreie Klebebänder mit einer Folie auf Basis von Polyolefinen und einer Klebemasse auf Basis von Acrylatdispersion und ihre Verwendung als Verpackungs-Klebeband.

Lösemittelhaltige Klebebänder mit einer Folie auf Basis von Polyolefinen, insbesondere auf Basis von biaxial gerecktem Polypropylen, und einer Klebemasse auf Basis von Acrylatdispersion sind bekannt und werden von bekannten Herstellern von Verpackungsklebebändern angeboten. Im Vergleich zu handelsüblichen Klebebändern, insbesondere Verpackungsklebebändern, mit Klebemassen auf Basis lösemittelhaltiger Naturkautschukmassen, die mit geeigneten Harzen abgemischt werden und im Vergleich zu Verpackungsklebebändern mit Hotmeltklebemassen auf Basis von Synthesekautschuk und Harzen weisen die Klebebänder mit Klebemassen auf Basis von Acrylatdispersionen aber ein deutlich schlechteres Anfaßvermögen zu Papier, insbesondere recycliertem Papier auf. Durch den wachsenden Anteil von recycliertem Papier bei der Herstellung von Verpackungskartons werden zunehmend Verpackungskartons verwendet, die demgemäß durch die bekannten Klebebänder mit einer Klebemasse auf Basis von Acrylatdispersion nicht zufriedenstellend verschlossen werden können.

Die Verwendung üblicher Klebebänder mit einer Klebemasse auf Basis von Acrylatdispersion, insbesondere Verpackungsklebebänder, zum Verschließen von Kartons aus recycliertem Papier oder Kartonagen, führt dazu, daß sich diese wenige Minuten nach dem Verschließen wieder öffnen. Üblicherweise tritt dieses Öffnen nicht für alle verschlossenen Kartons sondern nur für einen kleineren Teil auf, der dann jedoch in den heute üblichen automatischen Förder- und Verpakkungsstraßen zu Störungen und Nacharbeitungsaufwand führt.

Ursache für das Versagen der Klebebänder mit Klebemasse auf Basis von Acrylatdispersion ist das nicht ausreichende Anfaßvermögen der Klebemasse zu den Kartonoberflächen aus recycliertem Papier. Bei ausreichend großer Deckelklappenspannung der Kartons, verursacht durch den Fülldruck des verpackten Materials im Karton oder durch die dem Verschließen entgegenwirkende Spannung des Verpackungsmaterials, löst sich das Klebeband von der Kartonoberfläche und der Karton öffnet sich.

Nicht nur für Verpackungsklebebänder zum Kärtonverschluß sondern auch für andere Verpackungsklebebänder, wie beispielsweise Strapping-Tapes ist deshalb ein verbessertes Anfaßvermögen der Klebemassen aus Basis von Acrylatdispersionen notwendig.

Eine bekannte Maßnahme zur Verbesserung des Tacks ist die Zugabe von Harzen zur Acrylatdispersionen. Die Harze können sowohl als Harzlösung mit einem geeigneten Lösemittel, z.B. Toluol, als auch als wässrige Harzdispersion zugegeben werden. Die Zugabe von Harzlösungen ist jedoch ungeeignet, wenn lösemittelfreie Klebebänder das Ziel der Entwicklung sind.

Eine Übersicht über mögliche Harzdispersionen findet sich beispielsweise in"Resin Dispersions", Anne Z. Casey in Handbook of Pressure Sensitive Adhesive Technology, Second Edition, edited by Donatas Satas, Van Nostrand Reinhold New York, pp. 545 - 566. Ergebnisse von der Abmischung von Acrylatdispersionen mit Harzdispersionen werden in "Modification of Acrylic Dispersions" , Alexander Zettl in Handbook of Pressure Sensitive Adhesive Technology, Second Edition, edited by Donatas Satas, Van Nostrand Reinhold New York, pp. 457 - 493, beschrieben

Die Zugabe von Harzen zu Acrylatdispersionen alleine ist nicht geeignet, wenn Klebebänder mit verbessertem Anfaßvermögen zu Papier und gleichzeitig guter Verpackungssicherheit und leichtem Abrollen hergestellt werden sollen. Die Zugabe von Harzdispersionen auf Basis von Naturharzen, wie beispielsweise Kolophonium oder modifiziertem Kolophonium führt dazu, daß bei ausreichender Menge des zugegebenen Harzes zwar eine geringfügige Verbesserung im Anfaßvermögen erzielt wird, gleichzeitig wird aber die Kohäsion der Klebemasse so weit reduziert, daß die Klebebänder als Verpackungsklebebänder nicht mehr geeignet sind. Die Verwendung von Klebebänder mit nicht ausreichender Kohäsion führt dazu, daß die verschlossenen Kartons nach wenigen Tagen wieder aufgehen. Ausreichende Verpackungssicherheit ist dann gegeben, wenn die Kartons mindestens 15 Tage verschlossen bleiben, wünschenswert sind mehr als 4 Wochen.

Von der Firma Hercules BV wird eine Mischung aus Acrylatdispersionen (Acronal 85D, BASF), 33 Gew.-% Harzdispersionen auf Basis eines Kohlenwasserstoffharzes (Tacolyn 4177) und ca. 4 Gew.-% (2% bezogen auf die Mischung der wässrigen Dispersionen) von einem isocyanathaltigen Vernetzer (Basonat F DS 3425X, BASF) vorgeschlagen ("Tacolyn 4177 and Tacolyn 153 Resin Dispersions, use in WBPSA technical tapes for high temperature application"; Produktinformation Hercules BV vom 06.01.1995, Seite 1 - 4.). Hierdurch wird eine verbesserte Wärmestandsfestigkeit, verbesserte Kohäsion und verbesserter Tack zu Stahl erzielt. Die Verankerung der Masse auf einer Folie aus biaxial gerecktem Polypropylen ist jedoch nicht ausreichend. Ein ausreichend leises und leichtes Abrollen kann zudem durch die vorgeschlagenen Klebemassen nicht erzielt werden und die Verwendung des isocyanathaltigen Vernetzers führt zu erhöhtem Aufwand zur Arbeitssicherheit, da Basonat F DS 3425X als Gefahrstoff gemäß Gefahrstoffverordnung eingestuft ist und Sensibilisierung durch Einatmen oder Hautkontakt sowie Gesundheitsschädigung beim Einatmen möglich ist (Sicherheitsdatenblatt Basonat F DS 3425X gemäss 91/155/EWG vom 20.07.1994, BASF). Die vorgeschlagene Massnahme ist damit nicht geeignet, Klebebänder mit verbessertem Anfassvermögen zu recycliertem Papier bei gleichzeitig leisem und leichten Abrollen sowie ausreichender Masseverankerung zu erzielen.

Aufgabe der vorliegenden Erfindung war es, ein Klebeband mit einer Folie auf Basis von Polyolefinen und einer Klebemasse auf Basis von Acrylatdispersion zu schaffen, das gegenüber herkömmlichen, handelsüblichen Klebebändern mit einer Folie auf Basis von Polyolefinen und einer Klebemasse auf Basis von Acrylatdispersion deutlich verbessertes Anfassvermögen zu Papier und Karton, insbesondere aus recycliertem Papier und Karton aufweist. Weiterhin soll das neue Klebeband leicht und leise Abrollen und einen ausreichend guten Verbund zwischen Klebemasse und Trägerfolie aufweisen. Darüber hinaus soll das neue Klebeband als Verpackungsklebeband für handelsübliche Kartonagen geeignet sein.

Diese Aufgabe wurde gelöst durch ein Klebeband bestehend mindestens aus
a. einer Folie auf Basis von gereckten Polyolefinen und
b. einer Klebeschicht mit einem Schichtauftrag zwischen 10 und 45g/m² hergestellt aus einer Mischung enthaltend

| | |
|---|---|
| 65 - 94,5 Gew.-% | Acrylatdispersion (b.1); |
| 5 - 28 Gew.-% | Harzdispersion auf Basis von |
| | Kohlenwasserstoffharzen mit einem |
| | Erweichungspunkt zwischen 50 und 100 DEG C (b.2); |
| 0,5 - 6 Gew.-% | Alkoxyliertes Alkylphenol (b.3) und |
| 0 - 1% Gew.-% | eines geeigneten Vernetzers (b.4). |

Die Verwendung von Folien auf Basis von gereckten Polyolefinen ist lange bekannt und gehört zum Stand der Technik. Monoaxial und biaxial gereckte Folien auf Basis von Polypropylen werden in grossen Mengen für Verpackungsklebebänder, Strapping-Tapes und andere Klebebänder eingesetzt. Auch Folien auf Basis von gerecktem Polyethylen oder gereckten Copolymeren enthaltend Ethylen- und/oder Propyleneinheiten sind bekannt. Auch Mischungen der verschiedenen Polymere können zum Herstellen der Folien verwendet werden.

Monoaxial gerecktes Polypropylen zeichnet sich durch seine hohe Reissfestigkeit und geringe Dehnung in Längsrichtung aus und wird beispielsweise zur Herstellung von Strapping-Tapes verwendet. Die Dicken der Folien liegen bevorzugt zwischen 25 und 200 µm, insbesondere zwischen 40 und 130 µm. Folien aus monoaxial gerecktem Polypropylen sind zur Herstellung der erfindungsgemässen Klebebänder besonders geeignet.

Besonders bevorzugt zur Herstellung der erfindungsgemässen Klebebänder sind biaxial gereckte Folien auf Basis von Polypropylen mit eine Reckverhältnis in Längsrichtung zwischen 1:4 und 1:9, bevorzugt zwischen 1:4,8 und 1:6 sowie einem Reckverhältnis in Querrichtung zwischen 1:4 und 1:9, bevorzugt zwischen 1:4,8 und 1:8,5. Die erzielten Elastizitätsmodule in Längsrichtung, gemessen bei 10% Dehnung nach ASTM D882, liegen üblicherweise zwischen 1000 und 4000 N/mm², vorzugsweise zwischen 1500 und 3000 N/mm². Die erzielten Elastizitätsmodule in Querrichtung liegen ebenfalls zwischen 1000 und 4000 N/mm², vorzugsweise zwischen 1500 und 3000 N/mm².

Die Dicken der biaxial gereckten Folien liegen insbesondere zwischen 15 und 100 µm, vorzugsweise zwischen 20 und 50 µm.

Die biaxial gereckten Folien auf Basis von Polypropylen können mittels Blasfolienextrusion hergestellt werden, bei der die Reckung in alle Richtungen der Folienebene gleichzeitig stattfindet und üblicherweise in Längsrichtung und Querrichtung ähnliche mechanische Eigenschaften erreicht werden. Beispielhaft seien die biaxial gereckten Folien der Firma ICI Propafilm MG20, MG25, MG30 und MG35 sowie Propafilm OM15, OM20 und OM30 genannt. Grundsätzlich kann die Folienherstellung mittels Blasfolienextrusion durch einen weiteren Reckprozeß der extrudierten Folie in Längsrichtung ergänzt werden, um so gezielt geeignete Eigenschaften in Längsrichtung einzustellen.

Die biaxial gereckten Folien können aber auch mittels üblicher Flachfolienanlagen hergestellt werden, bei der üblicherweise zuerst die Reckung in Längsrichtung and danach die Reckung in Querrichtung ausgeführt wird. Mit diesem Prozeß können in Längs- und Querrichtung unterschiedliche Eigenschaften eingestellt werden. Die Reckverhältnisse in Längsrichtung liegen insbesondere zwischen 1:4,5 und 1:6 (bevorzugt 1:4,8 bis 1:5,6) und in Querrichtung zwischen 1:7 und 1:9. Beispielhaft seien biaxial gereckte Folien der Firma Mobil mit der Bezeichnung BICOR OPP FILM 35 MB 250 und der Firma Pao Yan Tsae Yih Co., LTD. (Taiwan) mit der Bezeichnung Pao Yan BOPP 35µm genannt. Grundsätzlich bekannt sind auch biaxial gereckte Folien, die zuerst in Längsrichtung, dann in Querrichtung und abschließend nocheinmal in Längsrichtung gereckt werden.

Monoaxial gereckte Folien sind überwiegend einschichtig, grundsätzlich können aber auch mehrschichtige, monoaxial gereckte Folien hergestellt werden. Bekannt sind überwiegend ein-, zwei- und dreischichtige Folien, wobei der Anzahl der Schichten auch größer gewählt werden kann. Die Dicke und die Zusammensetzung der verschiedenen Schichten sind nicht notwendigerweise gleich sondern können so gewählt werden, daß das gewünschte Eigenschaftsbild erzielt wird.

Biaxial gereckte Folien werden sowohl ein- als auch mehrschichtig hergestellt. Im Falle der mehrschichtigen Folien können auch hier die Dicke und Zusammensetzung der verschiedenen Schichten gleich sein aber auch verschiedenen Dicken und Zusammensetzungen sind bekannt.

Bevorzugt für die erfindungsgemäßen Klebebänder sind einschichtige, biaxial gereckte Folien und mehrschichtige, biaxial gereckte Folien auf Basis von Polypropylen, die einen ausreichend festen Verbund zwischen den Schichten aufweisen, da ein Delaminieren der Schichten während der Klebebandherstellung oder der Anwendung nachteilig sind.

Die Oberflächen der Folien können durch bekannte Verfahren behandelt werden. Bevorzugt sind Oberflächenbehandlung durch Coronabehandlung und /oder durch Flammenvorbehandlung. Ein Übersicht über die Verfahren zur Oberflächenbehandlung enthält beispielseise der Artikel "Surface pretreatment of plastics for adhesive bonding" (A. Kruse, G.Krüger, A.Baalmann and O.-D. Hennemann, J. Adhesion Sci. Technol., Vol.9, No12, pp. 1611-1621 (1995).

Die biaxial gereckten Folien für die erfindungsgemäßen Klebebänder werden vorzugsweise auf der der Masse zugewandten Seite mittels Corona- und/oder Flammenvorbehandlung vorbehandelt um so eine ausreichende Verankerung der Klebemasse auf der Folie zu erzielen. Die hierbei erzielten Oberflächenspannungen liegen insbesondere zwischen 35 und 47 mN/m und vorzugsweise zwischen 38 und 45 mN/m.

Nach der Beschichtung wird die nicht beschichtete Seite der Folie vorzugsweise einer Oberflächenbehandlung unterzogen. Bevorzugt ist eine Coronavorbehandlung mit der eine Oberflächenspannung, gemessen mit handelsüblichen Prüftinten, zwischen 30 und 45 mN/m und besonders bevorzugt zwischen 35 und 40 mN/m erzielt wird.

Der Schichtauftrag der Klebeschicht beträgt insbesondere 10 bis 45g/m². In einer bevorzugten Ausführung wird ein Schichtauftrag von 20 bis 35 g/m² eingestellt.

Acrylatdispersionen sind bekannt und werden sowohl für Klebemassen von Klebebändern als auch für Etiketten in großen Mengen eingesetzt. Die Herstellung von Acrylatdispersionen erfolgt üblicherweise in wässrigem Medium durch Polymerisation geeigneter Monomere. Die Herstellung kann sowohl mittels Batchprozeß als auch durch Zudosierung einer oder mehrerer Komponenten während der Polymerisation erfolgen. Beim Batchprozeß werden alle benötigten Komponenten gleichzeitig vorgelegt.

Die Eigenschaften der Acrylatdispersionen und der entsprechenden Klebemassen wird überwiegend durch die Auswahl der Monomere und das erzielte Molekulargewicht bestimmt. Die wichtigsten Monomere sind n-Butylacrylat, 2-Ethylhexylacrylat und Acrylsäure. Geeignete Monomerbausteine sind beschrieben in "Acrylic Adhesives", Donatas Satas in Handbook of Pressure Sensitive Adhesive Technology, Second Edition, edited by Donatas Satas, Van Nostrand Reinhold New York, pp. 396 - 456.

Die erfindungsgemäßen Acrylatdispersionen enthalten insbesondere
0 bis 10 % Acrylsäure-Einheiten;
0 bis 100% n-Butylacrylat-Einheiten;
0 bis 100% 2-Ethylhexylacrylat-Einheiten

In einer bevorzugten Ausführung werden Acrylatdispersionen mit 0,5 bis 3% Acrylsäure-Einheiten verwendet. In einer weiteren bevorzugten Ausführung werden Acrylatdispersionen mit 0,5 bis 3% Acrylsäure-Einheiten und 99,5 bis 90%, besonders bevorzugt 99,5 bis 96%, n-Butylacrylat-Einheiten verwendet. Ein weiteres Beispiel für erfindungsgemäße Acrylatdispersionen sind Acrylatdispersionen mit 80-90% 2-Ethylhexylacrylat-Einheiten und 8 bis 20% n-Butylacrylat-Einheiten.

Die Acrylatdispersionen können zusätzlich weitere Monomer-Einheiten enthalten, durch die beispielsweise die Glasübergangstemperatur und die Vernetzbarkeit gesteuert werden kann. Beispiele sind Methylacrylat, Ethylacrylat, Methylethylacrylat, Maleinsäureanhydrid, Acrylamid, Glycidylmethacrylat, Isopropylacrylat, n-Propylacrylat, Isobutylacrylat, n-Octylacrylat sowie die entsprechenden Methacrylate dieser Acrylate. Die Acrylatdispersionen enthalten üblicherweise 0-10% dieser zusätzlichen Monomereinheiten, entweder werden ausschließlich ein zusätzliche Monomereinheit oder Mischungen derselben verwendet.

Die erzielte Glasübergangstemperatur hängt von den eingesetzten Monomeren ab. Die für die erfindungsgemäßen Klebemassen verwendeten Acrylatdispersionen weisen im getrockneten Zustand Glasübergangstemperaturen insbesondere zwischen -80 und -15°C, bevorzugt zwischen -75 und -25°C und besonders bevorzugt zwischen -35 und -55°C auf.

Der Feststoffgehalt der Acrylatdispersionen liegt insbesondere zwischen 30 und 70 Gew.-%, bevorzugt zwischen 45 und 60 Gew.-%.

Wässrige Harzdispersionen, d.h. Dispersionen von Harz in Wasser, sind bekannt. Herstellung und Eigenschaften sind beispielsweise beschrieben in "Resin Dispersions", Anne Z. Casey in Handbook of Pressure Sensitive Adhesive Technology, Second Edition, edited by Donatas Satas, Van Nostrand Reinhold New York, pp. 545 - 566.

Harzdispersionen von Kohlenwasserstoffharzen und modifizierten Kohlenwasserstoffharzen sind ebenfalls bekannt und werden beispielsweise von Firma Hercules BV unter dem Handelsnamen Tacolyn angeboten (Beispiel Tacolyn 4177).

Für die erfindungsgemäßen Klebebänder werden Harzdispersionen auf Basis von Kohlenwasserstoffharzen oder modifizierten Kohlenwasserstoffharzen mit einem Erweichungspunkt zwischen 50 und 100°C verwendet. Die Klebemasse enthält insbesondere 5 - 28 Gew.-% der Harzdispersionen und bevorzugt 6 - 20 Gew.-% Harzdispersion. In einer weiteren bevorzugten Ausführung werden Harzdispersionen auf Basis von Kohlenwasserstoffharzen mit einem Erweichungspunkt zwischen 65 und 90°C verwendet.

Der Feststoffgehalt der Harzdispersionen liegt insbesondere zwischen 40 und 70%, bevorzugt zwischen 45 und 60%.

Erfindungsgemäß ist auch die Verwendung von Harzdispersionen auf Basis von Mischungen verschiedener Kohlenwasserstoffharze, sowie von Mischungen von erfindungsgemäßen Kohlenwasserstoffharzen mit anderen bekannten Harzen, wenn dadurch das charakteristische Eigenschaftsbild der erfindungsgemäßen Harzdispersion nicht eigenschaftsschädigend verändert wird. Möglich sind beispielsweise Mischungen von Kohlenwasserstoffharzen mit geringen Mengen von Harzen auf Basis von Kolophonium oder modifiziertem Kolophonium oder Phenolharzen, anderen Naturharzen, Harzestern oder Harzsäuren.

Weiterhin erfindungsgemäß ist die Verwendung von Mischungen verschiedener Harzdispersionen auf Basis von Kohlenwasserstoffharzen sowie von Mischungen von Harzdispersionen auf Basis von Kohlenwasserstoffharzen mit Harzdispersionen auf Basis von anderen bekannten Harzen, wie beispielsweise Harze auf Basis von Kolophonium oder modifiziertem Kolophonium oder Phenolharzen, anderen Naturharzen, Harzestern oder Harzsäuren.

Alkoxylierte Alkylphenole sind bekannt und beispielsweise beschrieben in US 4277387 und EP 6571. Die Verwendung von Alkoxylierten Alkylphenolen als Weichmacher wurde u.a. vorgeschlagen in "Modification of Acrylic Dispersions" , Alexander Zettl in Handbook of Pressure Sensitive Adhesive Technology, Second Edition, edited by Donatas Satas, Van Nostrand Reinhold New York, p. 471.

Die Eigenschaften der Alkoxylierten Alkylphenole werden durch den Alkylrest und überwiegend durch den Aufbau der Polyglykoletherkette bestimmt. Bei der Herstellung kann sowohl Ethylenoxid als auch Propylenoxid verwendet werden. In einer bevorzugten Ausführung wird Propoxyliertes Alkylphenol verwendet. Bevorzugt sind wasserunlösliche Alkoxylierte Alkylphenole. Weiterhin bevorzugt sind alkoxylierte Alkylphenole mit einem Siedepunktpunkt größer 100°C, bevorzugt größer 130°C und besonders bevorzugt größer 200°C.

Die erfindungsgemäßen Klebemassen enthalten 0,5 - 6 Gew.-% Alkoxyliertes Alkylphenol. In einer bevorzugten Ausführung werden 0,5 - 6 Gew.-% eines Alkylphenols mit einem Siedepunkt größer 130°C verwendet. In einer besonders bevorzugten Ausführung werden 1 - 4 Gew.-% Alkyxyliertes Alkylphenol, bevorzugt Propoxyliertes Alkylphenol, mit einem siedepunkt größer 130°C verwendet. In einer weiteren bevorzugten Ausführung wird Propoxyliertes Alkylphenol mit einem Siedepunkt größer 200°C verwendet.

Vernetzer für Acrylatdispersionen sind grundsätzlich bekannt und beispielsweise beschrieben in"Acrylic Adhesives" , Donatas Satas in Handbook of Pressure Sensitive Adhesive Technology, Second Edition, edited by Donatas Satas, Van Nostrand Reinhold New York, pp. 411 - 419.

Vernetzer auf Basis von Isocyanat sind grundsätzlich geeignet, aber wegen der begrenzten Topfzeiten und des erhöhten Aufwands bezüglich Arbeitssicherheit nicht bevorzugt. Ein Beispiel für Vernetzer auf Basis von Isocyanat ist Basonat F DS 3425 X (BASF).

Bevorzugt sind isocyanatfreie Vernetzer. Bevorzugt sind Vernetzer auf Basis von Salzen mehrfunktioneller Metalle. Diese sind grundsätzlich bekannt und werden beispielsweise in US Patent 3,740,366 (1973), US Patent 3,900,610 (1975), US Patent 3,770, 780 (1973) und US Patent 3,790,553 (1974) beschrieben. Besonders bevorzugt sind Vernetzer auf Basis von Zinkkomplexen, die mit Carboxylgruppen kovalente und/oder komplexartige Bindungen ausbilden können.

Die Klebemassen der erfindungsgemäßen Klebebänder enthalten 0 - 1 Gew.-% eines geeigneten Vernetzers. In einer bevorzugten Ausführung werden 0,1 - 1 Gew.-% eines isocyanatfreien Vernetzers, in einer besonders bevorzugten Ausführung 0,2 - 0,6 Gew.-% eines isocyanatfreien Vernetzers auf Basis eines Zinkkomplexes verwendet.

Die Menge an geeignetem Vernetzer kann an die Menge an erfindungsgemäßer Harzdispersion angepaßt werden. In einer bevorzugten Ausführung enthält die Klebemasse 6 bis 15 Gew.-% einer erfindungsgemäßen Harzdispersion und keinen Vernetzer. In einer weiteren bevorzugten Ausführung enthält die Klebemasse 12-20 Gew.-% Harzdispersion und 0,1 bis 0,3 Gew.-% eines Vernetzers aus Basis eines Zinkkomplexes.

Die zur Herstellung der erfindungsgemäßen Klebebänder verwendeten Dispersionen können weitere Komponenten enthalten, wenn diese so gewählt werden, daß die erfindungsgemäßen Eigenschaften hierdurch nicht verschlechtert werden. Beispiele sind Farbstoffe, Entschäumer und Verdickungsmittel sowie weitere Zuschlagstoffe zum Einstellen des gewünschten rheologischen Verhaltens. Modifikationen von Acrylatdispersionen sind bekannt und beispielsweise beschrieben in "Modification of Acrylic Dispersions" , Alexander Zettl in Handbook of Pressure Sensitive Adhesive Technology, Second Edition, edited by Donatas Satas, Van Nostrand Reinhold New York, pp. 457 - 493.

Die erfindungsgemäßen Klebebänder können weitere Schichten enthalten: Die Verwendung von geeigneten Primern, die zwischen Klebeschicht und Folie angeordnet werden, ist möglich, wenn dadurch die erfindungsgemäße, gute Verankerung der Klebemasse auf der Folie nicht verschlechtert wird. Die Verwendung einer geeigneten Lackierung, z.B. Release, Trennlackierung u.ä., die auf der nicht mit der Klebemasse beschichteten Oberfläche der Folie aufgebracht wird, ist möglich, wenn dadurch das leichte und leise Abrollen der erfindungsgemäßen Klebebänder nicht verschlechtert wird.

Die erfindungsgemäßen Klebebänder können auch durch Fasern, die überwiegend parallel zur Längsrichtung der Klebebänder ausgerichtet sind, verstärkt werden. Hierzu sind alle Fasern mit ausreichend guten mechanischen Eigenschaften geeignet. Beispiele sind Glasfasern, Fasern aus Polyolefinen, Polyamiden, Polyestern und Kohlefasern. Die Fasern können beispielsweise entweder in einer zusätzlichen Schicht zwischen Folie und Klebeschicht oder innerhalb der Klebeschicht angeordnet werden.

Die Herstellung der Klebebänder kann nach bekannten Verfahren erfolgen. Eine Übersicht über übliche Herstellverfahren findet sich beispielsweise in "Coating Equipment", Donatas Satas in Handbook of Pressure Sensitive Adhesive Technology, Second Edition, edited by Donatas Satas, Van Nostrand Reinhold New York, pp. 767 - 808. Die bekannten Verfahren zum Trocknen und Schneiden der Klebebänder sind ebenfalls im Handbook of Pressure Sensitive Adhesives Technology Seite 809 - 874 zu finden.

Die Beschichtung der Folien mit Dispersionsklebemassen erfolgt bevorzugt mit Drahtrakelsystemen, die so eingestellt werden, daß der gewünschte Masseauftag erzielt wird. Die nachfolgende Trocknung der beschichteten Folie erfolgt insbesondere im Trockenkanal, der mit Heißluft betrieben werden. Grundsätzlich ist auch eine zusätzliche Trocknung mittels Infrarotstrahlern möglich.

Die getrockneten Folien werden auf der Rückseite, die nicht mit Klebemasse beschichtet wurde, bevorzugt einer Oberflächenbehandlung mittels Coronaentladung unterzogen. Diese Oberflächenbehandlung ist so durchzuführen, daß leises und leichtes Abrollen erzielt wird.

Die erfindungsgemäßen Klebebänder weisen verbessertes Anfaßvermögen zu Papier, insbesondere zu recycliertem Papier, sowie hieraus hergestellten Kartonoberflächen, leichtes und leises Abrollen, gute Masseverankerung und hervorragende Eignung als Verpackungsklebebänder auf. Bei Verwendung von geeigneten, transparenten Folien und nicht eingefärbten Klebemassen weisen die erfindungsgemäßen Klebebänder sehr gute Transparenz auf, so daß beispielsweise überklebte Strichcodemarkierungen von üblichen Lesegeräten problemlos gelesen werden können.

Die erfindungsgemäßen Klebebänder können mittels üblicher Verfahren bedruckt werden.

Die erfindungsgemäßen Klebebänder sind für eine große Zahl von Klebebandanwendungen geeignet. Ein wichtiges Anwendungsfeld sind Verpackungsanwendungen. Die Klebebänder sind geeignet als Kartonverschlußklebebänder, allgemeine Verpackungsklebebänder, Strapping Tapes, Klebebänder zum Verschließen von Kunststoffverpackungen und Kunststoffbeuteln. Die Klebebänder sind zur Palettensicherung geeignet. Weitere Anwendungen sind das Bündeln von losen Güter und Transportgütern, wie beispielsweise Rohren, Holzleisten u.ä.. Die erfindungsgemäßen Klebebänder können zur Transportsicherung von beispielsweise Kühlschränken und anderen elektrischen und elektronischen Geräten verwendet werden. Weitere Anwendungen sind Etjkettenschutz, Oberflächenschutz, beispielsweise im Baubereich (Fensterrahmen) und Aufreißstreifen für Verpackungen. Ebenso sind Anwendungen im Bürobereich möglich.

Im folgenden soll die Erfindung anhand von Beispielen erläutert werden, ohne unnötige Einschränkung.

Die in den Beispielen genannten Parameter wurden mit Hilfe nachstehender Meßverfahren bestimmt.

Die Bestimmung des Wassergehalts der Klebemasse erfolgt nach der bekannten Methode von Karl Fischer. Hierbei wird eine bekannte Menge der Klebemasse erwärmt und das hierbei ausgetriebene Wasser unter Verwendung des Karl Fischer Reagenzes mittels Titration bestimmt.

Zur Bestimmung des Masseauftrags wird aus der beschichteten Folie ein kreisrundes Muster mit bekanntem Flächeninhalt ausgeschnitten und gewogen. Danach wird die Klebemasse durch Ablösen mit Aceton entfernt und die nun klebemassefreie Folie erneut gewogen. Aus der Differenz wird der Masseauftrag in g/m² berechnet.

Die Messung der Abrollkraft erfolgt bei konstanter Abrollgeschwindigkeit (0,3 m/min und 30 m/min) durch Messung des Drehmoments und Berechnung der Abrollkraft nach den bekannten Formeln in N/cm.

Die Bestimmung des Abrollgeräuschs erfolgt beim Abrollen des Klebebandes mit einer Abrollgeschwindigkeit von 45m/min. Gemessen wird das Abrollgeräusch in dB(A) im Abstand von 25cm vom Zentrum der Klebebandrolle mit einem handelsüblichen Lautstärkemeßgerät der Firma Brüel & Kjear (Type 2226). Eine gemessene Lautstärke kleiner als 83 dB(A) wird als "leise" charakterisiert.

Zur Charakterisierung des Anfaßvermögens zu Karton wird das Klebeband mit einem handelsüblichen Handabroller auf den Karton aufgebracht und mittels einer 2 kg schweren Stahlrolle angedrückt (zweimaliges Überrollen). Nach einer Wartezeit von 3 min wird das Klebeband mit einer Geschwindigkeit von ca. 30m/min unter einem Winkel von ca. 130° zur Kartonoberfläche parallel zur Faserrichtung der Kartonoberfläche abgezogen. Die Beurteilung des Anfaßvermögens zu Karton erfolgt qualitativ anhand der Menge an ausgerissenen Papierfasern im Vergleich zu einem handelsüblichen Verpackungsklebeband tesapack 4124 der Firma Beiersdorf, dessen Anfaßvermögen mit sehr gut charakterisiert wird.

Zur Bestimmung der Verpackungssicherheit wird ein Standardkarton (Versandkarton; 425mm x 325mm x 165mm; Länge x Breite x Höhe; Firma Europakarton; aufgebaut aus zweiwelliger Wellpappe mit 125g/m² Außenlage aus Kraftliner) mit dem Klebeband mittels eines handelsüblichen Verpackungsautomaten (Firma Knecht, Modell 6030 und Verschlußaggregat 6230, Einstellung ohne Bremsung) verschlossen. Das Klebeband wird mittig im üblichen U-Verschluß aufgebracht, so daß an den Stirnseiten jeweils 60mm Klebeband verklebt sind. Der Karton wird vor dem Verschließen vollständig mit Erbsen gefüllt und auf der Seitenfläche liegend bei 40°C gelagert. Die Verpackungssicherheit wird mit sehr gut charakterisiert, wenn der Karton länger als 15 Tage verschlossen bleibt.

### Beispiele

### a. Folie

Es wird eine biaxial gereckte Folie aus Polypropylen 35 MB 250 der Firma Mobil verwendet:

| | |
|---|---|
| Dicke: | 35µm; |
| Dichte: | 0,91 g/ml |
| Elastizitätsmodul in Längsrichtung: | 1600 N/mm² |
| Elastizitätsmodul in Querrichtung: | 2900 N/mm² |
| Reißdehnung längs: | 185 % |
| Reißdehnung quer: | 70 % |

Die Oberflächenspannung der Folienoberfläche, die mit der Klebemasse beschichtet wird, beträgt 39 mN/m. Die gegenüberliegende Oberfläche der Folie, die nicht mit der Klebemasse beschichtet wird, wird nach der Beschichtung auch mittels Coronaverfahren behandelt, so dass eine Oberflächenspannung von 38 mN/m gemessen wird.

### b. Komponenten der Klebemasse

b.1: Wässrige Acrylatdispersion der Firma Rohm and Haas mit der Bezeichnung Primal PS83D (Feststoffgehalt 53 Gew.-%; Ammoniakgehalt < 0,2 Gew.-%; pH-Wert 9,1 - 9,8)
b.2: Wässrige Harzdispersion auf Basis von Kohlenwasserstoffharzen (Firma Hercules BV; Tacolyn 4177; Feststoffgehalt 50 Gew.-%; Erweichungspunkt 73°C.
b.3: Propoxyliertes Alkylphenol (Firma Seppic; Bezeichnung WP1; Siedepunkt 286°C, lösemittelfrei).
b.4 : Wässrige Lösung eines isocyanatfreien Vernetzers auf Basis eines Zinkkomplexes (Firma ULTRA ADDITIVES INCORPORATED; Bezeichnung Zinplex 15; pH-Wert 11,0; Feststoffgehalt 25 Gew.-%).

### c. Herstellung der Klebemasse

Die Herstellung der zu beschichtenden Klebemasse wurde wie folgt durchgeführt:
c.1: In die Acrylatdispersion wird bei 23°C die Harzdispersion unter ständigem Rühren mit einem üblichen mechanischen Rührer zugegeben. Danach wird 30min weiter gut gerührt.
c.2: In die Mischung von Schritt c.1 wird bei 23°C das Alkylphenol unter ständigem Rühren dazugegeben. Danach wird 30min weiter gut gerührt.
c.3: Der Vernetzer wird bei 23°C unter ständigem Rühren zur Mischung aus Schritt c.2 zugegeben. Hierbei werden Rührer und Dosierung so aufeinander abgestimmt, daß eine möglichst schnelle und homogene Durchmischung erzielt wird ohne das Schaumbildung auftritt.
c.4: Die in Schritt c.3 hergestellte Mischung wird 24h bei 23°C ohne weiteres Rühren stehen gelassen.
c5.: Die in Schritt c.4 hergestellte Mischung wird nocheinmal ausreichend 15min gerührt. Erst dann erfolgt die Beschichtung.

### d. Beschichtung

Die Beschichtung der Folie a. mit der Klebemasse erfolgt durch ein Drahtrakel. Das Drahtrakel und die Beschichtungsgeschwindigkeit werden so eingestellt, daß nach der Trocknung der beschichteten Folie ein Masseauftrag von ca. 25,5g/m² gemessen wird. Beschichtungsgeschwindigkeit und Trocknerleistung werden so eingestellt, daß nach der Trocknung in der Klebemasse ein Wassergehalt von 0,08 bis 0,2 Gew.-% gemessen wird.

Die Beschichtung erfolgte auf einer Laborbeschichtungsanlage mit einer Arbeitsbreite von 500mm und einer Beschichtungsgeschwindigkeit von 5 m/min. Hinter der Beschichtungsstation mit Drahtrakelauftragswerk befindet sich ein Trockenkanal, der mit heißer Luft (ca. 120°C) betrieben wird. Nach der Beschichtung wurde die beschichtete Folie zu üblichen Klebebandrollen mit 50mm Breite konfektioniert. Die Bestimmung der Eigenschaften erfolgte nach dreitägiger Lagerung bei 23°C.

### e. Klebemasserezepturen

Folgende Klebemasserezepturen wurden verwendet:

| | |
|---|---|
| Versuch A | 100 Gew.-Teile Acrylatdispersion b.1 |
| | 20 Gew.-Teile Harzdispersion b.2 |
| | 4 Gew.-Teile Alkoxyliertes Alkylphenol b.3 |
| | 0,4 Gew.-Teile Vernetzer b.4 |
| Versuch B | 100 Gew.-Teile Acrylatdispersion b.1 |
| | 8 Gew.-Teile Harzdispersion b.2 |
| | 2 Gew.-Teile Alkoxyliertes Alkylphenol b.3 |

### f. Ergebnisse

| Eigenschaft | Versuch A | Versuch B |
|---|---|---|
| Wassergehalt der Klebemasse [g/m²] | 0,13 | 0,12 |
| Klebemasseauftrag [g/m²] | 24,5 | 26 |
| Masseverankerung | gut | gut |
| Abrollkraft bei 0,3 m/min [N/mm] | 3,3 | 3,3 |
| Abrollkraft bei 30 m/min [N/mm] | 4,6 | 3,7 |
| Abrollgeräusch bei 45 m/min | leise | leise |
| Verpackungssicherheit | sehr gut | sehr gut |
| Anfaßvermögen zu Karton | sehr gut | sehr gut |

## Patentansprüche

1. Lösungsmittelfreies Klebeband mit
a. einer Folie auf Basis von gereckten Polyolefinen und
b. einer Klebeschicht mit einem Schichtauftrag zwischen 10 und 45 g/m² hergestellt aus einer Mischung enthaltend
| | |
|---|---|
| 65 - 94,5% Gew.-% | Acrylatdispersion (b.1); |
| 5 - 28 % Gew.-% | Harzdispersion auf Basis von |
| | Kohlenwasserstoffharzen mit einem |
| | Erweichungspunkt zwischen 50 und 100 °C (b.2); |
| 0,5 - 6 % Gew.-% | Alkoxyliertem Alkylphenol (b.3) und |
| 0 - 1% Gew.-% | eines geeigneten Vernetzers (b.4). |

2. Klebeband nach Anspruch 1, **dadurch gekennzeichnet, dass** die Klebeschicht b. 6 - 20 % Gew.-% Harzdispersion auf Basis von Kohlenwasserstoffharzen enthält (b.2), insbesondere mit einem Erweichungspunkt zwischen 65 und 90 °C (b.2).

3. Klebeband nach Anspruch 1, **dadurch gekennzeichnet, dass** der Schichtauftrag der Klebeschicht b. 20 bis 35g/m² beträgt.

4. Klebeband nach Anspruch 1, **dadurch gekennzeichnet, dass** die Klebeschicht b. 0,5 - 6 Gew.-%, insbesondere 1 - 4 Gew.-% Alkoxyliertes, insbesondere Propoxyliertes Alkylphenol mit einem Siedepunkt grösser 130°C, insbesondere grösser 200 °C (b.3) enthält.

5. Klebeband nach Anspruch 1, **dadurch gekennzeichnet, dass** die Folie a. aus biaxial gerecktem Polyolefin auf Basis von Polypropylen besteht, insbesondere mit einer Foliendicke zwischen 20 und 100 µm.

6. Klebeband nach Anspruch 1, **dadurch gekennzeichnet, dass** die Klebeschicht b. 0,1 - 1 Gew.-% eines isocyanatfreien Vemetzers enthält (b4), insbesondere auf Basis eines Metallkomplexes, bevorzugt auf Basis eines Zinkkomplexes.

7. Klebeband nach Anspruch 6, **dadurch gekennzeichnet, dass** die Klebeschicht b. 0,2 - 0,6 Gew.-% eines isocyanatfreien Vemetzers auf Basis eines Zinkkomplexes enthält.

8. Klebeband nach Anspruch 1, **dadurch gekennzeichnet, dass** die Klebeschicht b. 12 - 20 Gew.-% einer Harzdispersion auf Basis von Kohlenwasserstoffharzen mit einem Erweichungspunkt zwischen 65 und 90 °C enthält.

9. Klebeband nach Anspruch 1, **dadurch gekennzeichnet, dass** zwischen der Folie a. und der Klebeschicht b eine Schicht aus einem geeignetem Primer aufgebracht ist.

10. Verwendung des Klebebandes nach einem der Ansprüche 1 bis 9 als Verpakkungsklebeband.

## Claims

1. Solvent-free adhesive tape having
a. a film based on oriented polyolefins, and
b. an adhesive layer in an applied amount of between 10 and 45 g/m², prepared from a mixture comprising
| | |
|---|---|
| 65 - 94.5% by weight | of acrylate dispersion (b.1); |
| 5 - 28% by weight | of resin dispersion based on hydrocarbon resins having a softening point of between 50 and 100°C (b.2); |
| 0.5 - 6% by weight | of alkoxylated alkylphenol (b.3), and |
| 0-1% by weight | of an appropriate crosslinking agent (b.4). |

2. Adhesive tape according to Claim 1, **characterized in that** the adhesive layer b. contains 6 - 20% by weight of resin dispersion based on hydrocarbon resins (b.2), in particular having a softening point of between 65 and 90°C (b.2).

3. Adhesive tape according to Claim 1, **characterized in that** the applied amount of the adhesive layer b. is from 20 to 35 g/m².

4. Adhesive tape according to Claim 1, **characterized in that** the adhesive layer b. contains 0.5 - 6% by weight, in particular 1 - 4% by weight, of alkoxylated alkylphenol, especially propoxylated alkylphenol, having a boiling point of greater than 130°C, in particular greater than 200°C (b.3).

5. Adhesive tape according to Claim 1, **characterized in that** the film a. consists of biaxially oriented polyolefin based on polypropylene, in particular having a film thickness of between 20 and 100 µm.

6. Adhesive tape according to Claim 1, **characterized in that** the adhesive layer b. contains 0.1 - 1% by weight of an isocyanate-free crosslinking agent (b.4), in particular based on a metal complex, preferably based on a zinc complex.

7. Adhesive tape according to Claim 6, **characterized in that** the adhesive layer b. contains 0.2 - 0.6% by weight of an isocyanate-free crosslinking agent based on a zinc complex.

8. Adhesive tape according to Claim 1, **characterized in that** the adhesive layer b. contains 12 - 20% by weight of a resin dispersion based on hydrocarbon resins having a softening point of between 65 and 90°C.

9. Adhesive tape according to Claim 1, **characterized in that** a layer of an appropriate primer is applied between the film a. and the adhesive layer b.

10. Use of the adhesive tape according to one of Claims 1 to 9 as adhesive packing tape.

## Revendications

1. Bande adhésive exempte de solvant, comportant
a. une feuille à base de polyoléfines étirées et
b. une couche adhésive appliquée à raison de 10 à 45 g/m² préparée à partir d'un mélange contenant
| | |
|---|---|
| de 65 à 94,5% | en poids de dispersion acrylique (b.1) |
| de 5 à 28 % | en poids de dispersion de résine à base de résines hydrocarbonées d'un point de ramollissement entre 50 et 100°C (b.2) |
| de 0,5 à 6 % | en poids d'alkylphénol alcoxylé (b.3) et |
| de 0 à 1 % | en poids d'un réticulant approprié (b.4). |

2. Bande adhésive selon la revendication 1, **caractérisée en ce que** la couche adhésive b. contient de 6 à 20 % en poids de dispersion de résine à base de résines hydrocarbonées (b.2), en particulier d'un point de ramollissement entre 65 et 90°C (b.2).

3. Bande adhésive selon la revendication 1, **caractérisée en ce que** la densité d'application de la couche adhésive b. est de 20 à 35 g/m².

4. Bande adhésive selon la revendication 1, **caractérisée en ce que** la couche adhésive b. contient de 0,5 à 6 % en poids, en particulier de 1 à 4 % en poids, d'alkylphénol alcoxylé, en particulier propoxylé, d'un point d'ébullition supérieur à 130°C, en particulier supérieur à 200°C (b.3).

5. Bande adhésive selon la revendication 1, **caractérisée en ce que** la feuille a. est constituée de polyoléfine étirée biaxialement à base de polypropylène, en particulier d'une épaisseur de feuille entre 20 et 100 µm.

6. Bande adhésive selon la revendication 1, **caractérisée en ce que** la couche adhésive b. contient de 0,1 à 1 % en poids d'un réticulant exempt d'isocyanate (b.4), en particulier à base d'un complexe métallique, de préférence à base d'un complexe de zinc.

7. Bande adhésive selon la revendication 6, **caractérisée en ce que** la couche adhésive b. contient de 0,2 à 0,6 % en poids d'un réticulant exempt d'isocyanate à base d'un complexe de zinc.

8. Bande adhésive selon la revendication 1, **caractérisée en ce que** la couche adhésive b. contient de 12 à 20 % en poids d'une dispersion de résine à base de résines hydrocarbonées d'un point de ramollissement entre 65 et 90°C.

9. Bande adhésive selon la revendication 1, **caractérisée en ce que**, entre la feuille a. et la couche adhésive b. est appliquée une couche d'un primaire approprié.

10. Utilisation de la bande adhésive selon l'une des revendications 1 à 9 comme bande adhésive d'emballage.
